Europäisches Patentamt

European Patent Office

Office européen des brevets

(11) Publication number: **0 083 169**
**B1**

(19)

(12) **EUROPEAN PATENT SPECIFICATION**

(45) Date of publication of patent specification: **30.07.86**

(51) Int. Cl.⁴: **B 01 D 46/12**

(21) Application number: **82306573.5**

(22) Date of filing: **09.12.82**

(54) **Filter apparatus having secondary gas discharge system.**

(30) Priority: **28.12.81 US 335172**

(43) Date of publication of application:
**06.07.83 Bulletin 83/27**

(45) Publication of the grant of the patent:
**30.07.86 Bulletin 86/31**

(84) Designated Contracting States:
**BE DE FR GB IT SE**

(56) References cited:
**DE-B-1 757 656**
**US-A-3 166 391**
**US-A-4 272 262**

(73) Proprietor: **Allis-Chalmers Corporation**
**P.O. Box 512**
**Milwaukee, Wisconsin 53201 (US)**

(72) Inventor: **Westlin, Karl Lincoln**
**6807 Cooper Chapel Road**
**Louisville Kentucky (US)**

(74) Representative: **Grundy, Derek George Ritchie**
**et al**
**CARPMAELS & RANSFORD 43, Bloomsbury**
**Square**
**London WC1A 2RA (GB)**

Courier Press, Leamington Spa, England.

## Description

### Background of the Invention
#### Field of the Invention

The present invention relates to gas separation devices and in particular to a filter apparatus having a reverse flow flushing arrangement for periodically cleaning the filter media in the apparatus.

### Description of the Prior Art

The prior art discloses a variety of separating devices utilizing reverse flow flushing arrangements for cleaning the filter media provided in those devices.

For example, U.S. patent No. 4,272,262 shows a high efficiency filtering device wherein a plurality of venturi nozzles are axially aligned in pairs above a V-shaped bank of filter panels which enables its clean gas compartments to be periodically pressurized to create a reverse flow of gases through the filter bank to dislodge particulates accumulating on the filter panels during filtering operations. As brought out in the foregoing patent, various baghouse arrangements having reverse flow flushing systems have also been in use for a number of years. Typically, in that type of design a plurality of filter bags are suspended in the gas cleaning compartment of the baghouse for filtering the dirty gases as they flow through the baghouse. However, because of the size and number of filter bags which are required to provide a filter area comparable to that provided by the filter panels in the foregoing patent, such baghouse installations are necessarily relatively large and bulky and thus are generally used only where space and mobility are a secondary consideration.

While the various separating devices heretofore in use have proven to be satisfactory for many applications, pressure losses due to uneven flow of the gas stream through the filters as well as re-entrapment of the particulates in the filters after they have been dislodged during reverse flow flushing operations have continued to be a problem.

### Summary of the Invention

The present invention relates to a gas separation device and in particular to a filter apparatus having a secondary gas discharge system for removing particulates from the face of the filter media during reverse gas flushing operations and for promoting a uniform flow of the gas stream through the media during filtering operations.

The filter apparatus embodying the invention includes a housing wherein a filter panel is secured in flow-through relation across its interior to provide a filter barrier for removing particulates in the gas stream flowing through the housing. In order to promote a more uniform flow of the gas stream through the filter panel, as well as to evacuate particulates dislodged from the panel during reverse flushing operations, the secondary gas discharge system is adapted to draw a predetermined portion of the dirty gases entering the housing across the face of the filter panel through a slot or opening extending along one edge of the filter panel. The invention also provides for a plate-like baffle secured across the width of the filter panel in the dirty gas chamber of the apparatus to form a filter cleaning zone of a tapered cross-sectional configuration converging at the slot opening into the secondary gas discharge system. This arrangement promotes even greater uniformity in the flow of the gas stream across the entire area of the filter media in the filter panel.

From the foregoing, it can be seen that the invention contemplates a filter apparatus which significantly improves the efficiency and service life of the filter media in the apparatus. However, it is to be understood that various changes and modifications can be made in the apparatus disclosed herein without departing from the spirit and scope of the invention.

### Description of the Drawings

Fig. 1 is a side elevational view, partially in section, showing a filter apparatus embodying the invention;

Fig. 2 is a cross-sectional view taken substantially along line II—II in Fig. 1;

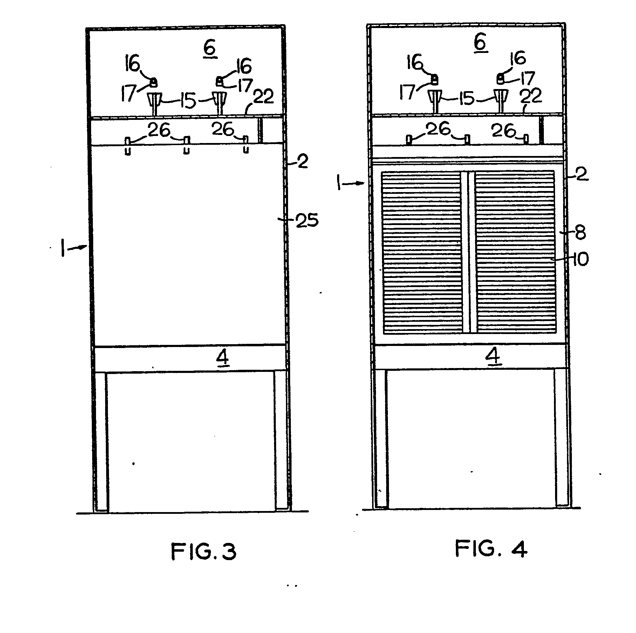

Fig. 3 is a cross-sectional view taken substantially along line III—III in Fig. 1; and

Fig. 4 is a cross-sectional view taken substantially along line IV—IV in Fig. 1.

### Description of the Preferred Embodiment

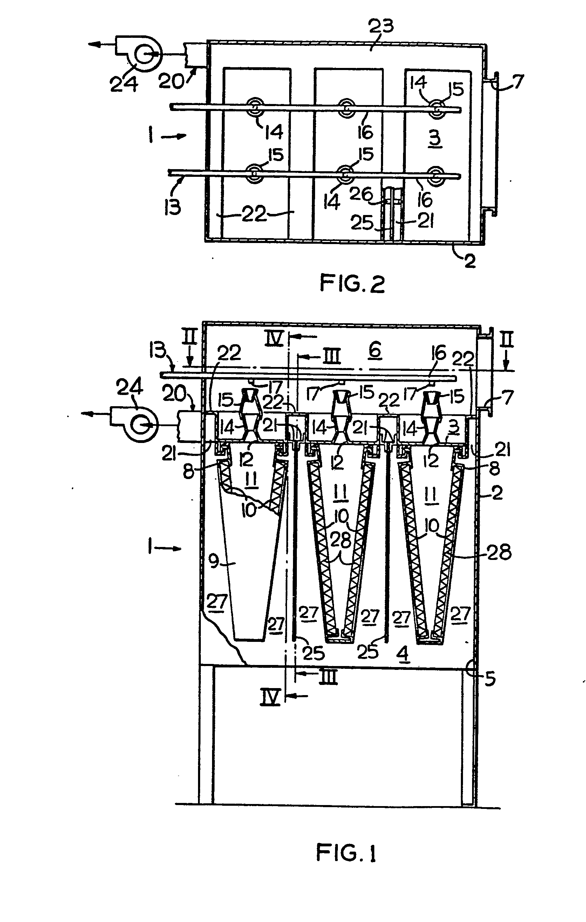

Referring to Fig. 1, the filter apparatus 1 embodying the invention is particularly suited for filtering atmospheric air as it is drawn into the air inlet of a turbine or compressor. The filter apparatus 1 includes a housing 2 wherein an apertured plate or partition 3 is secured across the housing 2 to divide it into a dirty gas chamber 4 opening into the atmosphere through an opening 5 in the bottom of the housing and a clean gas plenum 6 provided with a clean gas outlet 7 which is connected to the air inlet of the turbine or compressor. As shown in the drawings, a plurality of filter supporting structures or frames 8 of a V-shaped cross-sectional configuration enclosed by a plate 9 on each end are secured to the partition 3 in side-by-side relation. Each of the frames 8 supports a plurality of pleated filter panels 10 similar to those sold by the American Air Filter Company under its Pulse-Clean trademark to form a V-shaped bank of filter panels 10 within each of the frames 8 which cooperates with the partition 3 to define a clean gas compartment 11 opening into the clean gas plenum 6 through apertures 12. Thus, the arrangement provides for atmospheric air to be drawn into the dirty gas chamber 4 through the opening 5 in the bottom of the housing whereafter it filters through the filter panels 10 into the clean gas compartments 11. The filtered air then flows through the apertures 12 into the clean gas plenum 6 and out of the housing through the clean gas outlet 7. In this regard, it is to be understood that although the embodiment shown in the drawings is designed to filter atmospheric air prior to introducing it into a turbine or compressor, the filter apparatus can also be used to filter industrial process gases prior to discharging them to the atmosphere by enclosing the bottom of the housing with a suitable hopper and providing an appropriate inlet for the dirty gases opening into the dirty gas chamber. Additionally, while it is not described in detail in this specification, the filter apparatus 1 is preferably of a welded sheet metal construction wherein the filter panels 10 can be removably secured in the frames 8 in essentially the same manner as shown in U.S. Patent No. 4,272,262.

To accommodate periodic cleaning of the filter panels 10, the filter apparatus 1 is provided with a reverse gas flushing system 13 such as that shown in the latter patent. As shown in Fig. 1, the flushing system 13 includes a first venturi nozzle 14 secured to the partition 3 about each of the apertures 12 in the clean gas system 6, a second venturi nozzle 15 secured in coaxially spaced relation to each of the first venturi nozzles 14, and a gas header or supply pipe 16 connected to a source of pressurized gas (not shown). The supply pipe 16 is provided with a gas nozzle 17 aligned above each of the venturi nozzles 14 and 15 which is adapted to periodically direct a high energy jet or pulse of clean air through the venturi nozzles which aspirates a flow of the filtered air in the gas plenum 6 through the venturi nozzles into the clean gas compartments 11. This creates a reverse flow of the filtered air through the filter panels 10 to dislodge the particulates which in turn drop out of the dirty gas chamber 4 through the opening 5 in the bottom of the housing.

Again referring to the drawings, the invention provides that the filter apparatus 1 includes a secondary gas discharge system 20 for removing particulates accumulating on the surface of the filter panels 10 during reverse gas flushing of the panels, as well as promoting a relatively uniform air flow through each of the filter panels. As shown in Fig. 1, a slot or secondary opening 21 is provided in the partition 3 extending along each side of the frames 9 which opens into a discharge duct 22 connected to a common header duct 23 which is connected to a draft inducing device in the form of a blower 24 adapted to draw a predetermined portion of the unfiltered air in the dirty gas chamber 4 across the faces of the filter panels 10. The size or capacity of the blower 24 is selected so that about 5—10 percent of the total flow of air entering the dirty gas chamber 4 will be drawn across the filter panels 10 and conducted out of the housing 2 through the ducts 22 and 23. Thereafter, depending on what the filter apparatus is being used for, those gases may be discharged directly into the atmosphere, or alternatively, directed into a secondary filtering apparatus (not shown) such as that disclosed in U.S. patent No. 4,264,345 wherein the gases are cleaned prior to discharging them into the atmosphere. For example, in applications where the filter apparatus is used to clean air entering the intake of a turbine or compressor, those gases would generally be discharged directly into the atmosphere. On the other hand, where the filter apparatus is used to remove pollutants from industrial process gases or the like, the gases drawn into the secondary gas discharge system would be circulated through a secondary filtering apparatus prior to discharging them to the atmosphere.

As noted above, during normal filtering operations the blower 24 maintains a draft across the faces of the filter panels 10 which serves to promote a uniform flow of air through the filter panels 10. However, in order to further enhance this flow distributing feature of the invention, a baffle plate 25 is secured to the partition 3 with suitable brackets 26 between each of the frames 8. Moreover, each of the baffle plates 25 serves to prevent particulates which are dislodged from one of the filter panels 10 during pulsing of its respective clean gas compartment 11 from being deposited on the filter panel opposite it on the frame 8 adjacent to it in those arrangements where each of the clean gas compartments 11 are pulsed sequentially during filter cleaning operations. Each of the baffle plates 25 is sized to extend generally coextensively with its adjacent filter panel 10 and cooperates with the filter panels to form a tapered filter cleaning zone 27 extending along the length of each of the panels and converging at its respective slot 21 opening into the duct 22 of the gas discharge system. This arrangement facilitates sizing the frames 8 to position the filter panels at an angle which gradually reduces the cross-sectional area of the cleaning zones in proportion to the air flow along the length of each of the filter panels, thereby maintaining the velocity of the air stream flowing along the filter panel. This in turn results in a relatively uniform flow of air through the entire surface of the filter. In this regard, it should be noted that in some installations the shape of the frame 8 and the baffle plates 25 will be sufficient to maintain an essentially uniform air flow through the filter panels 10. In those cases, the blower 24 would be turned off during normal filtering operations and the gas discharge system only used to remove particulates accumulating on the face of the filter panels during reverse gas flushing of the panels.

The invention also contemplates aligning the pleated filter panels 10 in each of the frames 8 to promote inertial separation of the particulates from the air stream as it enters the filter panels. As shown in the drawings, the pleats 28 in the pleated filter media of each of the filter panels 10 are aligned perpendicularly to the flow of the air stream as it enters the panels. Thus, since the gas discharge system maintains a draft in the filter cleaning zones 27 which maintains the momentum of the particulates along the faces of each of the filter panels, the pleats 28 tend to effect inertial separation of the particulates from the air as it flows into the filter panels.

## Claims

1. A filter apparatus for removing particulates from a dirty gas stream, having: a housing; a gas impervious partition (3) dividing the interior of the housing (2) into a dirty gas chamber (4) and clean gas chamber (6), said partition having an aperture (12) providing fluid communication between said chambers; dirty gas inlet (5) for admitting a dirty gas stream into the dirty gas chamber; clean gas outlet (7) for the exit of a primary clean gas stream from the clean gas chamber; a filter panel (10) secured in flow-through relation across said aperture (12) to provide a filter barrier between the dirty gas chamber (4) and the clean gas chamber (6); a pulsing apparatus (13) for periodically inducing a reverse flow of gases through the filter panel to reverse flush clean the filter panel (10); characterised by a secondary gas discharge system (20) having a gas discharge duct (22); a secondary opening (21) into the dirty gas chamber (4), said opening (21) being positioned to extend along an edge of said filter panel (10) adjacent said aperture and opposite said dirty gas inlet with said secondary opening (21) being in fluid communication with said gas discharging duct (22); and a draft inducing device (24) connected to said gas discharge duct (22) to draw a predetermined portion of the dirty gas stream across the face of the filter panel (10), through said secondary opening (21) and out of the dirty gas chamber (4).

2. A filter apparatus according to claim 1, characterised in that a plate-like baffle (25) is mounted in said dirty gas chamber (4) to extend in spaced relation across the full width and length of the filter panel (10) at an angle thereto to form therebetween a filter cleaning zone (27) of a tapered cross-sectional configuration within the dirty gas chamber (4) that converges to a narrow end at said gas discharge duct, said secondary opening (21) being in fluid communication with said narrow end of said filter cleaning zone.

3. A filter apparatus according to claim 2 wherein a plurality of spaced side-by-side filter supporting structures (8) for receiving said filter panels (10) are secured across said aperture, each of said supporting structures (8) being of a generally V-shaped cross-sectional configuration; characterised in that said plate-like baffle (25) is mounted between adjacent ones of said filter supporting structures (8) and extends to said partition (3) to form a plurality of tapered filter cleaning zones (27).

4. A filter apparatus according to claim 3 characterised in that said gas discharge duct (22) includes a plurality of spaced parallel longitudinally extending ducts each positioned in the clean gas chamber (6) across the narrow end of each filter cleaning zone, said ducts each having an opening along the longitudinal length thereof in registry with said secondary opening (21) to receive dirty gas exiting from the narrow end of each of said filter cleaning zones (27).

5. A filter apparatus according to claim 4 characterised in that each duct is positioned across the narrow ends of two adjacent filter cleaning zones, and in that a secondary opening (21) is located on each side of said plate-like baffle (25).

6. A filter apparatus according to any of the preceding claims characterised in that said secondary opening (21) is sized so that 5 to 10 percent of the total volumetric flow of dirty gases will pass across the full length of the filter panel and out through said secondary opening.

## Revendications

1. Appareil filtrant pour la séparation des particules d'un courant de gaz brut, comportant: une enveloppe; une cloison étanche au gaz divisant l'intérieur de l'enveloppe (2) en une chambre de gaz brut (4) et une chambre de gaz filtre (6), ladite cloison présentant une ouverture (12) de mise en communication des fluides desdites chambres; une entrée de gaz brut (5) pour l'admission d'un flux de gaz brut dans la chambre de gaz brut; une sortie de gaz filtré (7) permettant à un flux de gaz filtré primaire de sortir de la chambre de gaz filtre; un panneau filtrant (10) fixé en relation de traversée de part en part en travers de ladite ouverture (12) pour établir un barrage filtrant entre la chambre de gaz brut (4) et la chambre de gaz filtre (6); un appareil de pulsation (13) pour créer périodiquement un flux de gaz à contre-courant à travers le panneau filtrant en vue du nettoyage du panneau filtrant (10) par balayage à contre-courant; caractérisé par un circuit de décharge de gaz secondaire (20) comportant un conduit de décharge (22); une ouverture secondaire (21) débouchant dans la chambre de gaz brut (4), cet ouverture (21) étant placée de manière à longer un bord dudit panneau filtrant (10) voisin dudit orifice et opposé à ladite entrée de gaz sale, ladite ouverture secondaire (21) étant en communication fluidique avec ledit conduit de décharge de gaz (22), et un dispositif provoquant un tirage (24) relié audit conduit de décharge de gaz (22) pour aspirer une fraction prédéterminée du flux de gaz brut en travers la surface du panneau filtrant (10), par ladite ouverture secondaire (21) et la faire sortir de la chambre de gaz brut (4).

2. Appareil filtrant selon la revendication 1, caractérisé en ce qu'un déflecteur en forme de plaque (25) est monté dans ladite chambre de gaz brut (4) pour s'étendre en relation d'espacement sur toute la largeur et la longueur du panneau filtrant sous un certain angle avec celui-ci pour définir entre aux à l'intérieur de la chambre de gaz sale (4) une zone de nettoyage de filtre (27) de section allant en s'amenuisant qui converge vers une extrémité étroite située au niveau dudit conduit de décharge, ladite ouverture secondaire (21) étant en communication avec ladite extrémité étroite de ladite zone de nettoyage du filtre.

3. Appareil filtrant selon la revendication 2 dans lequel une pluralité de structures de support de filtre (8) de réception desdits panneaux filtrants (10) disposées côte à côte sont fixées en travers de ladite ouverture, chacune de ces structures de support (8) ayant généralement une configuration à section en forme de V; caractérisé en ce que ledit déflecteur en forme de plaque (25) est monté à côté des structures de support de filtre (8) voisines et s'étend jusqu'à ladite cloison (3) pour délimiter une pluralité de zones de nettoyage de filtre (27) allant en s'amenuisant.

4. Appareil filtrant selon la revendication 3, caractérisé en ce que ledit conduit de décharge de gaz (22) comporte une pluralité de conduits espacés parallèlement s'étendant longitudinalement, chacun d'eux placé dans la chambre de gaz filtré (6) en travers de l'extrémité étroite de chaque zone de nettoyage de filtre, lesdits conduits présentant tous sur leur longueur une ouverture correspondant avec ladite ouverture secondaire (21) pour recevoir du gaz brut sortant de l'extrémité étroite de chacune desdites zones de nettoyage de filtre (27).

5. Appareil filtrant selon la revendication 4, caractérisé en ce que chaque conduit est disposé transversalement aux extrémités étroites de deux zones de nettoyage de filtre adjacentes, et en ce qu'une ouverture secondaire (21) est située de chaque côté dudit déflecteur en forme de plaque (25).

6. Appareil filtrant selon l'une quelconque des revendications précédentes, caractérisé en ce que ladite ouverture secondaire (21) est dimensionnée en sorte que 5 à 10 % du débit volumétrique total de gaz brut traversent toute la longueur du panneau filtrant et ressortent par ladite ouverture secondaire.

## Patentansprüche

1. Filtervorrichtung zum Entfernen von Teilchen aus einem verunreinigten Gasstrom mit:
einem Gehäuse;
einer gasundurchlässigen Teilwand (3), die das Innere des Gehäuses (2) in eine Kammer (4) für verunreinigtes Gas und eine Reingas-Kammer (6) unterteilt, wobei die Teilwand einen eine Fluidverbindung zwischen den Kammern schaffenden Durchbruch (12) besitzt;
einem Einlaß (5) für verunreinigtes Gas zum Zulassen eines verunreinigten Gasstromes in die Kammer für verunreinigtes Gas;
einem Reingas-Auslaß (7) für den Austritt eines Primär-Reingasstromes von der Reingaskammer;
einer in Durchflußbeziehung über dem Durchbruch (12) gesicherten Filtertafel (10) zur Schaffung einer Filtersperre zwischen der Kammer (4) für verunreinigtes Gas und der Reingaskammer (6);
einer Pulsiervorrichtung (13) zum periodischen Einführend eines Rückstromes von Gasen durch die Filtertafel um durch Umkehrspülung die Filtertafel (10) zur reinigen;
gekennzeichnet durch eine zweites Gasauslaß-System (20) mit einer Gasauslaß-Leitung (22);
einer zweiten Öffnung (21) in die Kammer (4) für verunreinigtes Gas, wobei die Öffnung (21) so angeordnet ist, daß sie sich längs einer Kante der Filtertafel (10) dem Durchbruch benachbart und dem Einlaß für verunreinigtes Gas gegenüberliegend erstreckt und wobei die zweite Öffnung (21) mit der Gasauslaß-Leitung (22) in Fluidverbindung ist;
und durch ein Zug-Induzierungsgerät (24), das an der Gasauslaß-Leitung (22) angeschlossen ist, um einen vorbestimmten Anteil des verunreinigten Gasstromes über die Fläche der Filtertafel (10), durch die zweite Öffnung (21) und aus der Kammer (4) für verunreinigtes Gas heraus abzuziehen.

2. Filtervorrichtung nach Anspruch 1, dadurch gekennzeichnet, daß eine plattenartige Ablenkscheibe (25) in der Kammer (4) für verunreinigtes Gas so angebracht ist, daß sie sich in Abstandsbeziehung über die volle Breite und Lange der Filtertafel (10) mit einem Winkel zu dieser erstreckt, um dazwischen eine Filterreinigungszone (27) von sich verjüngender Querschnittsgestaltung innerhalb, der Kammer (4) für verunreinigtes Gas zu bilden, die an der Gasauslaß-Leitung zu einem engen Ende zusammenläuft, wobei die zweite Öffnung (21) in Fluidverbindung mit dem engen Ende der Filterreinigungszone steht.

3. Filtervorrichtung nach Anspruch 2, bei der eine Vielzahl von mit Abstand Seite an Seite befindlichen Filter-Stützaufbauten (8) zur Aufnahme der Filtertafeln (10) über dem Durchbruch sicher befestigt sind, jede der Stützaufbauten (8) von allgemein V-förmiger Querschnittsgestaltung ist, dadurch gekennzeichnet, daß die plattenartige Ablenkscheibe (25) zwischen benachbarten Filter-Stützaufbauten (8) angebracht ist und sich zu der Teilwand (3) hin erstreckt, um eine Vielzahl von sich verjüngenden Filterreinigungszonen (27) zu bilden.

4. Filtervorrichtung nach Anspruch 3, dadurch gekennzeichnet, daß die Gasauslaß-Leitung (22) eine Vielzahl von mit Abstand parallelen, sich in Längsrichtung erstreckenden Leitungen enthält, die jeweils in der Reingaskammer (6) über dem engen Ende jeder Filterreinigungszone angeordnet sind, wobei die Leitungen jeweils eine Öffnung längs ihrer sich in Längsrichtung erstreckenden Länge besitzen in Ausrichtung mit der zweiten Öffnung (21), um aus dem engen Ende jeder der Filterreingungszonen (27) austretendes verunreinigtes Gas aufzunehmen.

5. Filtervorrichtung nach Anspruch 4, dadurch gekennzeichnet, daß jede Leitung über die engen Enden von zwei benachbarten Filterreinigungszonen angesetzt ist und daß eine zweite Öffnung (21) an jeder Seite der plattenartigen Ablenkscheibe (25) angeordnet ist.

6. Filtervorrichtung nach einem der vorangehenden Ansprüche, dadurch gekennzeichnet, daß die zweite Öffnung (21) so bemessen ist, daß 5 bis 10 % der gesamten volumetrischen Strömung von verunreinigten Gasen über die gesamte Länge der Filtertafel und durch die zweite Öffnung hinaus vorbeitritt.

FIG.2

FIG.1

FIG. 3

FIG. 4